# EUROPEAN PATENT APPLICATION

(11) **EP 4 102 348 A1**
(43) Date of publication of application: **14.12.2022**
(21) Application number: 20917407.7
(22) Date of filing: 03.02.2020
(51) Int. Cl.: G06F 3/0488

(54) **ELECTRONIC DEVICE, INFORMATION PROCESSING METHOD, AND PROGRAM**

(71) Applicant: Sony Group Corporation, Tokyo 108-0075 (JP)
(72) Inventor: OGAWA, Hiroki, Tokyo 140-0002 (JP); ASA, Kenji, Tokyo 140-0002 (JP); YAMAMOTO, Hiroki, Tokyo 140-0002 (JP)
(74) Representative: D Young & Co LLP
(86) International application number: PCT/JP2020/003962
(87) International publication number: WO 2021/156919

(57) **Abstract**

An electronic device, an information processing method, and a program with high security are proposed. The electronic device includes a fingerprint sensor and a control unit. The control unit detects a fingerprint and a gesture of a finger that performs a touch operation on the fingerprint sensor. The control unit executes processing associated with the fingerprint and the gesture detected at the time of the touch operation while performing fingerprint authentication based on the fingerprint detected at the time of the touch operation.

## Description

### Field

The present invention relates to an electronic device, an information processing method, and a program.

### Background

The operation of the electronic device such as a smartphone is performed after the security lock is released by personal authentication. As a method of personal authentication, fingerprint authentication using a fingerprint sensor is widely used. A technology for detecting a user's operation such as a swipe operation based on the movement of a finger on a fingerprint sensor has also been proposed (see, for example, Patent Literatures 1 to 3).

### Citation List

### Patent Literature

Patent Literature 1: JP 2004-318890 A
Patent Literature 2: JP 2019-121396 A
Patent Literature 3: JP 2019-040622 A

### Summary

### Technical Problem

The conventional technology described above assigns functions other than fingerprint authentication to the fingerprint sensor. The detection of the operation of the user and the fingerprint authentication are performed separately and not as an integrated process. Therefore, the processing cannot be performed by identifying the operation subject. After the security lock is released, a person other than the authenticated user can freely perform an operation. Therefore, there is a problem in terms of security.

The present disclosure proposes an electronic device, an information processing method, and a program with high security.

### Solution to Problem

According to the present disclosure, an electronic device is provided that comprises: a fingerprint sensor; and a control unit that detects a fingerprint and a gesture of a finger that performs a touch operation on the fingerprint sensor, and executes a processing associated with the fingerprint and the gesture detected at the time of the touch operation while performing fingerprint authentication based on the fingerprint detected at the time of the touch operation. According to the present disclosure, an information processing method in which an information process of the electronic device is executed by a computer, and a program for causing the computer to execute the information process of the electronic device, are provided.

### Brief Description of Drawings

FIG. 1 is a view illustrating an example of an electronic device.
FIG. 2 is a diagram illustrating a usage example of the electronic device.
FIG. 3 is a diagram illustrating a usage example of the electronic device.
FIG. 4 is a diagram illustrating an example of a functional configuration of the electronic device.
FIG. 5 is a diagram illustrating an example of fingerprint information.
FIG. 6 is a diagram illustrating an example of gesture operation information.
FIG. 7 is a diagram illustrating an example of gesture information.
FIG. 8 is a diagram illustrating an example of processing information.
FIG. 9 is a diagram illustrating an example of a setting screen for the gesture operation information.
FIG. 10 is a diagram illustrating an example of the setting screen for the gesture operation information.
FIG. 11 is a flowchart illustrating an example of an information processing method.

### Description of Embodiments

Hereinafter, embodiments of the present disclosure will be described in detail with reference to the drawings. In each of the following embodiments, the same parts are denoted by the same reference numerals, and redundant description will be omitted.

Note that the description will be given in the following order.
[1. Overview]
[2. Configuration of electronic device]
[3. Description of information processing method]
[4. Modifications]
[5. Effects]

### [1. Overview]

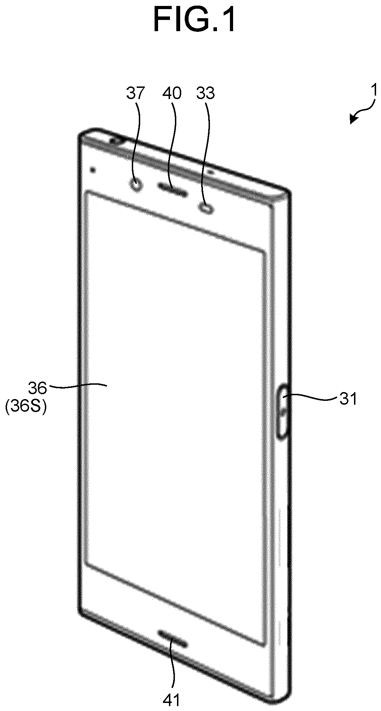

FIG. 1 is a view illustrating an example of an electronic device 1. Hereinafter, a smartphone will be described as an example of the electronic device 1.

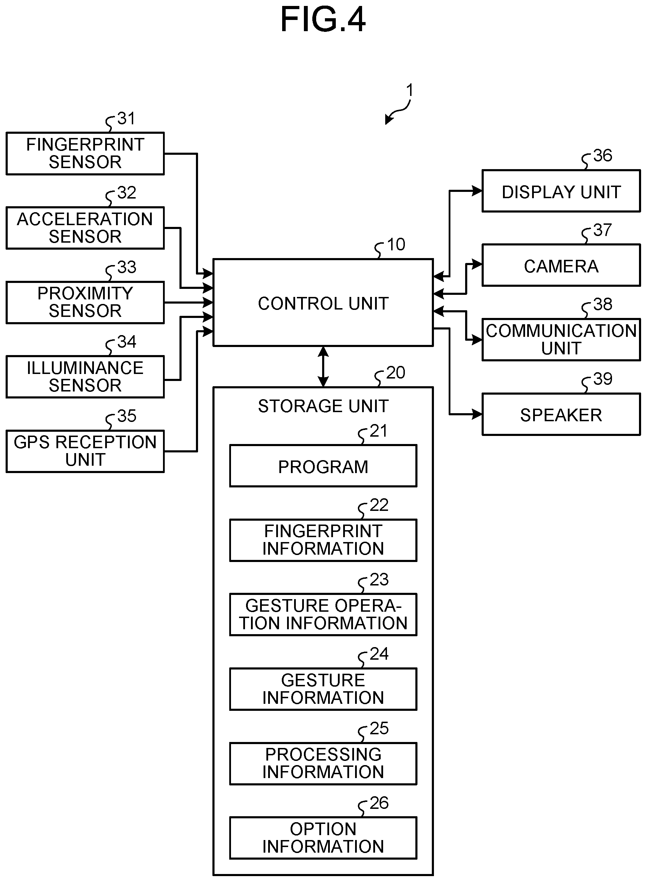

The electronic device 1 includes a fingerprint sensor 31 and a control unit 10 (see FIG. 4). A gesture operation function of performing an operation by a gesture is assigned to the fingerprint sensor 31. The control unit 10 detects the fingerprint of a finger that performs a touch operation on the fingerprint sensor 31 and the movement of the fingerprint based on a signal from the fingerprint sensor 31. The control unit 10 detects a gesture based on the movement of the fingerprint. The control unit 10 executes processing associated with the fingerprint and the gesture detected at the time of the touch operation while performing fingerprint authentication based on the fingerprint detected at the time of the touch operation.

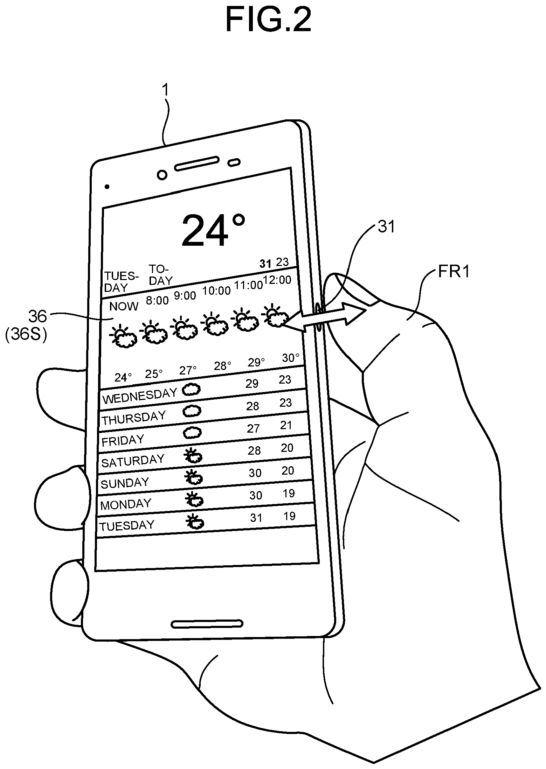

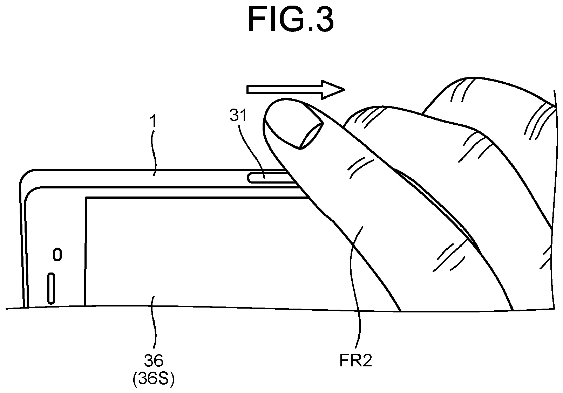

FIGS. 2 and 3 are diagrams illustrating a usage example of the electronic device 1.

The example of FIG. 2 is an example in which an application is executed by a tap operation on the fingerprint sensor 31. In FIG. 2, the user double-taps the fingerprint sensor 31 with a thumb FR1 of the right hand. The electronic device 1 detects the fingerprint of the finger at the time of double-tapping, and collates the fingerprint with fingerprint data registered in the electronic device 1 in advance. As a result of the collation, when the personal authentication is performed, processing associated with the type of the fingerprint (thumb of the right hand of the registered user) and the type of the gesture (double-tapping) is executed. In the example of FIG. 2, a processing of executing a weather forecast application is performed.

The example of FIG. 3 is an example in which the camera is activated by a swipe operation on the fingerprint sensor 31. In FIG. 3, the user swipes the fingerprint sensor 31 with an index finger FR2 of the right hand in a state in which the electronic device 1 is turned sideways. The electronic device 1 detects the fingerprint of the finger at the time of swiping, and collates the fingerprint with fingerprint data registered in the electronic device 1 in advance. As a result of the collation, when the personal authentication is performed, processing associated with the type of the fingerprint (index finger of the right hand of the registered user) and the type of the gesture (swiping) is executed. In the example of FIG. 3, a processing of activating the camera is performed.

The fingerprint sensor 31 can also function as a shutter button of the camera. For example, after the camera is activated, the user can perform photographing by tapping the fingerprint sensor 31 while checking a scene displayed on a display screen 36S.

The detection of the operation of the user and the fingerprint authentication are simultaneously performed as an integrated process. The fingerprint sensor 31 operates, for example, in a locked state in which the security lock is valid. The gesture operation on the fingerprint sensor 31 is performed in the locked state. The processing executed by the gesture operation is performed in the locked state. While the processing is being executed, an operation performed by other than the user who has registered the fingerprint in the electronic device 1 is not accepted. After the processing is completed, the locked state can be maintained without releasing the security lock. Therefore, the electronic device 1 with high security is provided.

### [2. Configuration of electronic device]

Hereinafter, the configuration of the electronic device 1 will be described in detail. FIG. 4 is a diagram illustrating an example of a functional configuration of the electronic device 1.

The electronic device 1 includes, for example, the control unit 10, a storage unit 20, the fingerprint sensor 31, an acceleration sensor 32, a proximity sensor 33, an illuminance sensor 34, a global positioning system (GPS) reception unit 35, a display unit 36, a camera 37, a communication unit 38, and a speaker 39.

The control unit 10 is, for example, a computer including a processor and a memory. The memory of the control unit 10 includes, for example, a random access memory (RAM) and a read only memory (ROM). The control unit 10 executes a command included in a program 21 stored in the storage unit 20 while referring to various data and information stored in the storage unit 20 as necessary.

The storage unit 20 stores, for example, the program 21, fingerprint information 22, gesture operation information 23, gesture information 24, processing information 25, and option information 26. The program 21 causes a computer to execute information processing of the electronic device 1. The control unit 10 performs various processings in accordance with the program 21 stored in the storage unit 20. The storage unit 20 may be used as a work area for temporarily storing the processing result of the control unit 10.

The storage unit 20 includes, for example, an arbitrary non-transitory storage medium such as a semiconductor storage medium and a magnetic storage medium. The storage unit 20 includes, for example, an optical disk, a magneto-optical disk, or a flash memory. The program 21 is stored in, for example, a non-transitory computer-readable storage medium. The program 21 is installed in the storage unit 20 via, for example, wireless communication by the communication unit 38 or a non-transitory storage medium.

The fingerprint sensor 31 detects a fingerprint on the fingerprint sensor 31. As a fingerprint detection method, for example, known methods such as a finger capacitance method, an optical method, and an ultrasonic method are used. The fingerprint sensor 31 operates in a locked state in which the security lock is valid. The fingerprint sensor 31 outputs, for example, signals indicating fingerprint information at a plurality of times detected in chronological order to the control unit 10. The control unit 10 detects a fingerprint and a gesture based on the signal from the fingerprint sensor 31. The gesture is detected based on, for example, the number of times the finger has come into contact with the fingerprint sensor 31, a time interval at which the contact is detected, and a time change in the position of the fingerprint (movement of the fingerprint).

Examples of the gesture detected by the control unit 10 include single-tapping, multi-tapping, and swiping. The control unit 10 can detect the direction of the swipe based on the time change in the position of the fingerprint. The swipe operation is performed along the longitudinal direction and the lateral direction of the side surface of the electronic device 1 provided with the fingerprint sensor 31. Hereinafter, for convenience, in the longitudinal direction of the side surface, a direction from a telephone transmission port 41 toward a telephone reception port 40 is referred to as "up", and a direction from the telephone reception port 40 toward the telephone transmission port 41 is referred to as "down". In the lateral direction of the side surface, a direction from the fingerprint sensor 31 toward the side of the display screen 36S is referred to as "left", and a direction from the fingerprint sensor 31 toward the side opposite to the display screen 36S is referred to as "right". The control unit 10 detects an upward swipe, a downward swipe, a leftward swipe, and a rightward swipe as types of swipes.

The fingerprint sensor 31 also serves as, for example, a power button for turning on and off the power. The fingerprint sensor 31 is provided, for example, at the central portion of the side surface of the electronic device 1, but the position of the fingerprint sensor 31 is not limited to this. For example, the fingerprint sensor 31 may be provided at a position adjacent to the display screen 36S on the front surface of the electronic device 1. The fingerprint sensor 31 may be built in the display unit 36.

The acceleration sensor 32 detects acceleration applied to the electronic device 1. For example, the control unit 10 detects the moving state of the electronic device 1 based on the acceleration detected by the acceleration sensor 32. The moving state of the electronic device 1 includes, for example, walking and standstill of the user who possesses the electronic device 1.

The proximity sensor 33 detects the presence of an object close to the electronic device 1 in a non-contact manner. The illuminance sensor 34 detects brightness around the electronic device 1. The control unit 10 detects the holding state of the electronic device 1 based on, for example, detection results of the proximity sensor 33, the illuminance sensor 34, and the acceleration sensor. The holding state of the electronic device 1 includes, for example, a state in which the electronic device 1 is held by a user's hand (held by hand) and a state in which the electronic device 1 is stored in a pocket or a bag.

The GPS reception unit 35 receives a radio wave from a GPS satellite. For example, the control unit 10 detects the position information of the current position of the electronic device 1 based on the radio wave detected by GPS reception unit 35.

The display unit 36 displays various types of information including characters, images, symbols, and figures on the display screen 36S. As the display unit 36, for example, a known display such as a liquid crystal display (LCD) and an organic electro-luminescence display (OELD) is used. The display unit 36 has, for example, a function of a touch panel that detects a user's touch operation.

The camera 37 captures an image around the electronic device 1. The camera 37 includes, for example, an in-camera that captures an image on the entire surface side of the electronic device 1 and an out-camera that captures an image on the back surface side of the electronic device 1. The camera 37 includes, for example, an image sensor such as a charge coupled device image sensor (CCD) and a complementary metal oxide semiconductor (CMOS).

The communication unit 38 performs wireless communication with another communication device via a repeater. The repeater is, for example, a short-range wireless base station (access point) provided in a home, an office, and the like. The communication unit 3 performs communication based on a known communication standard such as Long Term Evolution (LTE), Bluetooth (registered trademark), and WiFi (registered trademark). For example, the control unit 10 causes the communication unit 38 to search for a base station and detects the network connection state of the communication unit 38.

The speaker 39 outputs sound based on the sound signal input from the control unit 10. The sound output from the speaker 39 includes a sound included in music, a video reproduced by the electronic device 1, and a ring tone. The speaker 39 also serves as, for example, a receiver that outputs a voice of the other person on the phone, and is provided in the telephone reception port 40.

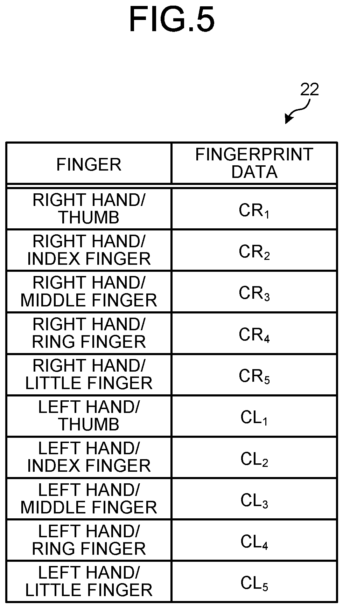

FIG. 5 is a diagram illustrating an example of the fingerprint information 22.

The fingerprint information 22 includes one or more fingerprint data. In the example of FIG. 5, for example, fingerprint data of a plurality of fingers of the owner of the electronic device 1 is included in the fingerprint information 22. The fingerprint data is data representing the features of the fingerprint. The fingerprint information 22 in FIG. 5 includes, for example, fingerprint data CR₁ of the thumb of the right hand, fingerprint data CR₂ of the index finger of the right hand, fingerprint data CR₃ of the middle finger of the right hand, fingerprint data CR₄ of the ring finger of the right hand, fingerprint data CR₅ of the little finger of the right hand, fingerprint data CL₁ of the thumb of the left hand, fingerprint data CL₂ of the index finger of the left hand, fingerprint data CL₃ of the middle finger of the left hand, fingerprint data CL₄ of the ring finger of the left hand, and fingerprint data CL₅ of the little finger of the left hand.

The fingerprint data is represented by, for example, positions of a plurality of feature points included in the fingerprint and distances between the feature points. The feature points of the fingerprint include, for example, a center point, an end point, a triangulation point, and a bifurcation point of the fingerprint. The center point is a point to be the center of the fingerprint. The bifurcation point is a point at which the ridge of the fingerprint is bifurcated. The end point is a point where the ridge is broken. The triangulation point is a point where ridges converge from three directions.

The control unit 10 collates the fingerprint detected based on the signal from the fingerprint sensor with the fingerprint information 22. For example, the control unit 10 calculates a concordance rate (similarity) between the feature included in the detected fingerprint and the feature included in the fingerprint data. As a method of computing the concordance rate, for example, a known method such as a minutiae matching method is used. The control unit 10 compares the concordance rate with the reference value and collates the fingerprint with the fingerprint data.

As the reference value, for example, a second threshold smaller than a first threshold necessary for releasing the security lock is used. When a gesture is performed on the fingerprint sensor 31, there is a possibility that the detected fingerprint is distorted or a part of the fingerprint is not detected because of the movement of the finger. Therefore, the processing is performed not by the main authentication using the first threshold but by the temporary authentication using the second threshold.

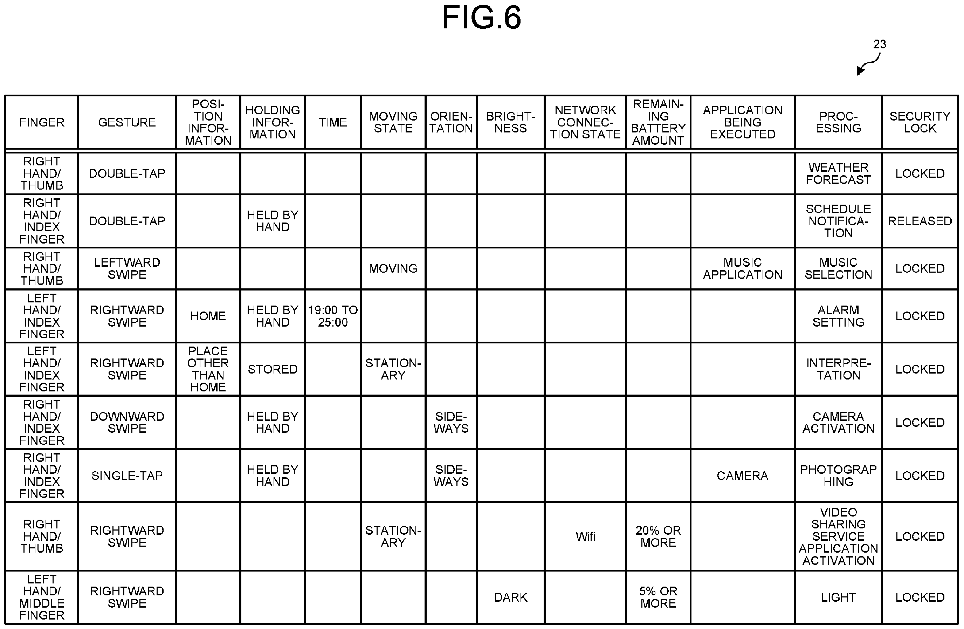

FIG. 6 is a diagram illustrating an example of the gesture operation information 23.

In the gesture operation information 23, a combination of gesture and processing is defined for each fingerprint data. The gesture operation information 23 may include one or more pieces of option information associated with processing with the fingerprint data. For example, in the gesture operation information 23, a combination of a gesture, option information, and processing is defined for each fingerprint data.

The option information includes, for example, at least one of position information of the electronic device 1, information regarding a holding state of the electronic device 1 by a user, time information, information regarding a movement status of the electronic device 1, information regarding an orientation of the electronic device 1, information on brightness around the electronic device 1, information regarding a network connection state of the electronic device 1, information on a remaining battery amount of the electronic device 1, and information on an application being executed by the electronic device 1 in a locked state.

For example, the control unit 10 detects a fingerprint and a gesture in a locked state in which the security lock is valid. The control unit 10 collates the fingerprint with the fingerprint data, and executes processing associated with the fingerprint and the gesture when the temporary authentication is performed. When a concordance rate equal to or higher than the first threshold is detected at the time of fingerprint collating, the control unit 10 can perform main authentication and release the security lock. However, erroneous authentication may be performed because of distortion of a fingerprint and the like. Therefore, the gesture information includes, for example, information on whether or not to release the security lock after the processing is finished when a concordance rate equal to or higher than the first threshold is detected at the time of fingerprint collating.

The authentication accuracy is different for each gesture. For example, in the swipe operation, the finger moves away from the fingerprint sensor 31 while skidding on the fingerprint sensor 31. Therefore, distortion of the fingerprint and the like are likely to occur, and the authentication accuracy is expected to be low. In the tap operation, the finger is pressed against the fingerprint sensor 31 and stopped. Therefore, distortion of the fingerprint and the like hardly occur, and authentication accuracy is expected to be high. In the gesture operation information 23, necessity of releasing the security lock after processing is set in consideration of authentication accuracy for each gesture.

For example, in the example of FIG. 6, when the double-tap operation by the finger matching the fingerprint data of the thumb of the right hand is detected, the control unit 10 activates the weather forecast application. After the processing is completed, the security lock is not released, and the locked state is maintained.

When a double-tap operation by the finger matching the fingerprint data of the index finger of the right hand is detected in a state in which the user holds the electronic device 1 in the hand, the control unit 10 performs schedule notification. The schedule notification is processing of notifying the user of the schedule by using characters displayed on the display unit 36 or a voice output from the speaker 39. When the concordance rate equal to or higher than the first threshold is detected at the time of fingerprint collating, the security lock is released after the processing is completed.

When the leftward swipe operation by the finger matching the fingerprint data of the thumb of the right hand is detected in a state in which the user is executing the music application while moving, the control unit 10 plays the music of the next song of the song that is currently being played. After the processing is completed, the locked state is maintained.

When the rightward swipe operation by the finger matching the fingerprint data of the index finger of the left hand is detected in a state in which the user holds the electronic device 1 in the hand at a place other than home in the time zone of 19:00 to 25:00, the control unit 10 activates the setting screen of the alarm setting. After the processing is completed, the locked state is maintained.

When the rightward swipe operation by the finger matching the fingerprint data of the index finger of the left hand is detected in a state in which the user is stationary while storing the electronic device 1 at a place other than home, the control unit 10 performs interpretation. After the processing is completed, the locked state is maintained.

When the downward swipe by the finger matching the fingerprint data of the index finger of the right hand is detected in a state in which the user holds the electronic device 1 in the hand and turns the electronic device 1 sideways, the control unit 10 activates the camera 37. After the processing is completed, the locked state is maintained.

After the camera is activated, when a single-tap operation by the finger matching the fingerprint data of the index finger of the right hand is detected in a state in which the user holds the electronic device 1 in the hand and turns the electronic device 1 sideways, the control unit 10 performs photographing by the camera 37. After the processing is completed, the locked state is maintained.

When the rightward swipe operation by the finger matching the fingerprint data of the thumb of the right hand is detected in a state in which the user is stationary in a Wifi environment and remaining battery amount of the electronic device 1 is 20% or more, the control unit 10 activates the application of the video sharing service. After the processing is completed, the locked state is maintained.

When the leftward swipe operation by the finger matching the fingerprint data of the middle finger of the left hand is detected in a state in which the surroundings are dark and the remaining battery amount of the electronic device 1 is 5% or more, the control unit 10 displays the entire surface of the display unit 36 in white to function as a light. After the processing is completed, the locked state is maintained.

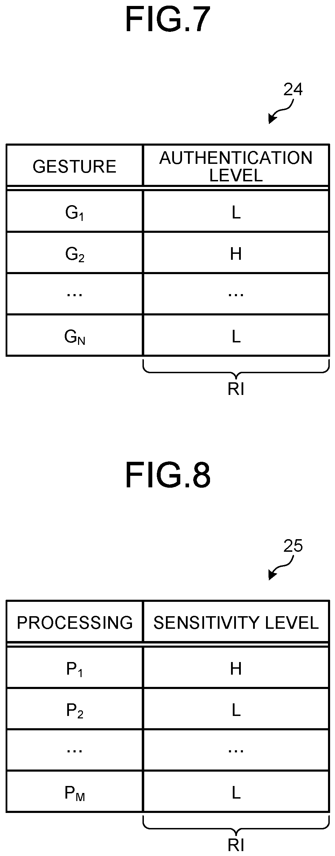

FIG. 7 is a diagram illustrating an example of the gesture information 24. FIG. 8 is a diagram illustrating an example of the processing information 25.

In the gesture information 24, for example, a plurality of gestures that can be assigned to the fingerprint sensor 31 and an authentication level for each gesture are defined. The authentication level is a label indicating an expected value of whether or not the main authentication of the registered user's finger is correctly performed during the gesture operation. In the example of FIG. 7, N gestures G₁ to G_{N} are defined as gestures that can be assigned to the fingerprint sensor 31. As the authentication level, a high level H and a low level L are defined.

The high level H indicates that there is a low possibility that distortion occurs in the detected fingerprint or a part of the fingerprint is not detected. In the high level H gesture, even when a high concordance rate required in the main authentication is requested at the time of fingerprint collating, authentication failure hardly occurs. The low level L indicates that there is a high possibility that distortion occurs in the detected fingerprint or a part of the fingerprint is not detected. In the low level L gesture, when a high concordance rate required in the main authentication is requested at the time of fingerprint collating, authentication failure is likely to occur.

In the processing information 25, for example, a plurality of processings that can be assigned to the fingerprint sensor 31 and a sensitivity level for each processing are defined. The sensitivity level is a label indicating the sensitivity of information handled in processing. In the example of FIG. 8, M processings P₁ to P_{M} are defined as processings that can be assigned to the fingerprint sensor 31. As the sensitivity level, the high level H and the low level L are defined.

The information of the authentication level and the information of the sensitivity level are reference information RI that is referred to for determining appropriateness of the combination of gesture and processing. The storage unit 20 stores a plurality of gestures that can be assigned to the fingerprint sensor 31, a plurality of processings that can be assigned to the fingerprint sensor 31, and reference information that is referred to for determining appropriateness of the combination of gesture and processing. For example, the control unit 10 determines whether or not the combination of gesture and processing is appropriate with reference to the input gesture authentication level and processing sensitivity level.

For example, the control unit 10 causes the display unit 36 to display a setting screen for setting a gesture operation. The user sets the gesture operation assigned to the fingerprint sensor 31 through the setting screen. The control unit 10 notifies the user when an inappropriate combination of gesture and processing is input through the setting screen of the gesture operation information 23.

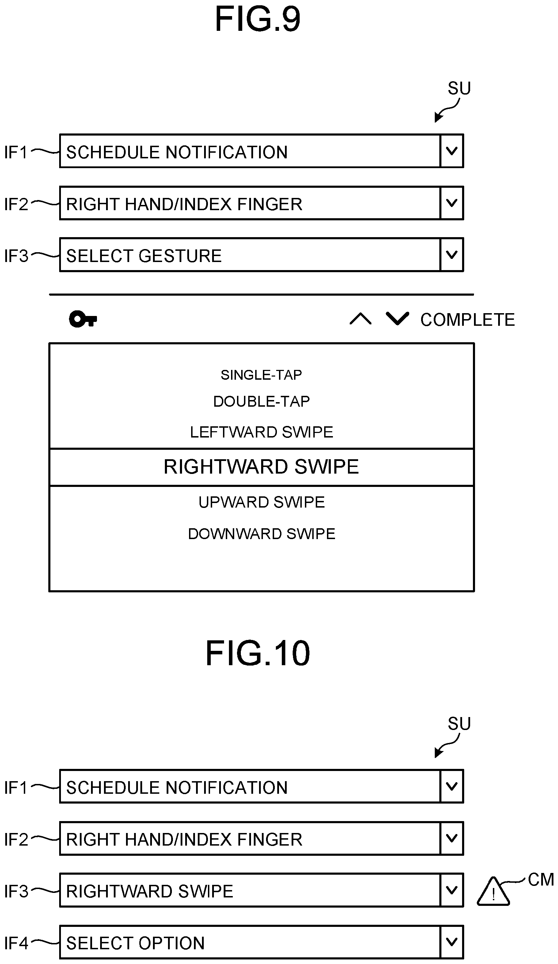

FIGS. 9 and 10 are diagrams illustrating an example of a setting screen SU for the gesture operation information 23.

For example, a processing input field IF1, a finger input field IF2, a gesture input field IF3, and an option input field IF4 are displayed on the setting screen SU. Each input field is, for example, a drum roll type pull-down menu. FIG. 9 illustrates, for example, a state of selecting "rightward swipe" from the plurality of gestures displayed in the menu.

In the swipe operation, the finger moves away from the fingerprint sensor 31 while skidding on the fingerprint sensor 31. Such an operation is likely to cause distortion of a fingerprint or the like, and is expected to have low authentication accuracy. Therefore, the low level L is defined as the authentication level of the rightward swipe in the gesture information 24. On the other hand, the processing input to the processing input field IF1 is "schedule notification". Since the schedule notified by the schedule notification is personal information of the user, the sensitivity is high. Therefore, in the processing information 25, the high level H is defined as the sensitivity level of the schedule notification.

When the high level H processing is assigned to the low level L gesture, the control unit 10 determines that the combination of gesture and processing is inappropriate, and notifies the user. In the example of FIG. 10, a caution mark CM is displayed on the right side of the gesture input field IF3. The control unit 10 notifies the user of the caution mark CM and urges the user to make a decision to input an appropriate gesture.

### [3. Description of information processing method]

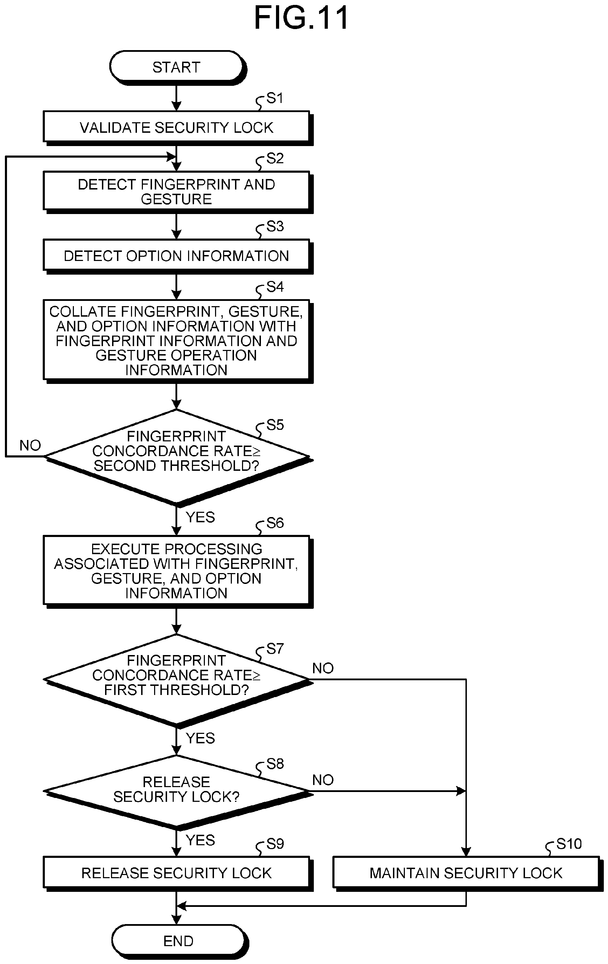

FIG. 11 is a flowchart illustrating an example of an information processing method executed by the electronic device 1.

In Step S1, the control unit 10 validates the security lock. In the locked state in which the security lock is valid, operations of users other than the user authenticated by the fingerprint sensor 31 are not accepted.

Next, in Step S2, the control unit 10 detects a fingerprint and a gesture based on the signal from the fingerprint sensor 31.

Next, in Step S3, the control unit 10 detects one or more pieces of option information based on signals from the acceleration sensor 32, the proximity sensor 33, the illuminance sensor 34, the GPS reception unit 35, and the communication unit 38.

Next, in Step S4, the control unit 10 collates the fingerprint, the gesture, and the option information with the fingerprint information 22 and the gesture operation information 23. Here, first, the control unit 10 calculates the concordance rate between the feature included in the fingerprint and the feature included in each piece of the fingerprint data registered in the fingerprint information 22. The control unit 10 compares the concordance rate with the second threshold smaller than the first threshold necessary for releasing the security lock, and collates the fingerprint with each piece of the fingerprint data.

Next, in Step S5, the control unit 10 determines whether or not the concordance rate is the second threshold or higher. When the concordance rate is the second threshold or higher (Step S5: Yes), the process proceeds to Step S6. In Step S6, the control unit 10 executes a processing associated with the fingerprint data matching the fingerprint and the gesture. When the concordance rate is lower than the second threshold (Step S5: No), the process returns to Step S2.

Next, in Step S7, the control unit 10 determines whether or not the concordance rate is the first threshold or higher. When the concordance rate is the first threshold or higher (Step S7: Yes), the process proceeds to Step S8. In Step S8, the control unit 10 determines whether to release the security lock after the processing is completed based on the gesture operation information 23. When it is determined to release the security lock based on the gesture operation information 23 (Step S8: Yes), the process proceeds to Step S9. In Step S9, the control unit 10 releases the security lock.

When the concordance rate is lower than the first threshold in Step S7 (Step S7: No) and when it is determined in Step S8 that the security lock is not to be released (Step S8: No), the process proceeds to Step S10. In Step S10, the control unit 10 maintains the locked state without releasing the security lock even after the processing is completed.

### [4. Modifications]

In the above embodiment, an example in which the electronic device 1 is a smartphone has been described. However, the electronic device 1 is not limited to a smartphone. The present disclosure is widely applicable to mobile electronic devices such as smartphones, tablet terminals, notebook computers, and mobile phones, and electronic devices including home electric appliances such as digital cameras.

### [5. Effects]

The electronic device 1 includes the fingerprint sensor 31 and the control unit 10. The control unit 10 detects a fingerprint and a gesture of a finger that performs a touch operation on the fingerprint sensor 31. The control unit 10 executes processing associated with the fingerprint and the gesture detected at the time of the touch operation while performing fingerprint authentication based on the fingerprint detected at the time of the touch operation. In the information processing method according to the present embodiment, the information processing of the electronic device 1 described above is executed by a computer. The program 21 according to the present embodiment causes a computer to implement the information processing of the electronic device 1 described above.

According to this configuration, fingerprint authentication and gesture detection are performed as an integrated process. Since only the registered user can perform the operation, the electronic device 1 with high security is provided.

The electronic device 1 includes the storage unit 20. The storage unit 20 stores the fingerprint information 22 and the gesture operation information 23. The fingerprint information 22 includes one or more fingerprint data. In the gesture operation information 23, a combination of gesture and processing is defined for each fingerprint data. The control unit 10 collates the fingerprint and the gesture with the fingerprint information 22 and the gesture operation information 23, and executes processing associated with the fingerprint and the gesture.

According to this configuration, different gesture operations can be assigned to each finger. Therefore, various processings can be implemented.

For example, the control unit 10 detects a fingerprint and a gesture in a locked state in which the security lock is valid. For example, the control unit 10 executes processing associated with the fingerprint and the gesture without releasing the security lock.

According to this configuration, even while processing is being performed by fingerprint authentication, another person cannot perform an operation. Therefore, the electronic device 1 with high security is provided.

For example, the control unit 10 calculates a concordance rate between the feature included in the fingerprint and the feature included in each piece of the fingerprint data. The control unit 10 compares the concordance rate with the second threshold smaller than the first threshold necessary for releasing the security lock, collates the fingerprint with each piece of the fingerprint data, and executes processing associated with the fingerprint data matching the fingerprint and the gesture.

When a gesture is performed on the fingerprint sensor 31, there is a possibility that the detected fingerprint is distorted or a part of the fingerprint is not detected because of the movement of the finger. Therefore, when a high concordance rate is requested at the time of authentication, the authentication is likely to fail, and the operation may be stagnant. In the present embodiment, since the authentication is performed even at a low concordance rate, the authentication hardly fails. Thus, excellent operational feeling can be obtained.

For example, when the concordance rate is smaller than the first threshold, the control unit 10 maintains the locked state after the processing is completed.

According to this configuration, security is maintained even when authentication is performed with a low concordance rate.

For example, when the concordance rate is equal to or higher than the first threshold, the control unit 10 releases the security lock after the processing is completed.

According to this configuration, it is possible to save time and effort for performing fingerprint authentication again after the processing is completed.

The gesture operation information 23 defines, for example, a combination of a gesture, option information, and processing for each fingerprint data.

According to this configuration, the content of the processing can be made different not only by the combination of the fingerprint and the gesture but also by the combination of the fingerprint and the gesture with the option information. Therefore, the number of processings that can be assigned to the fingerprint sensor 31 increases.

The option information includes, for example, at least one of position information of the electronic device 1, information regarding a holding state of the electronic device 1 by a user, time information, information regarding a movement status of the electronic device 1, information regarding an orientation of the electronic device 1, information on brightness around the electronic device 1, information regarding a network connection state of the electronic device 1, information on a remaining battery amount of the electronic device 1, and information on an application being executed by the electronic device 1 in a locked state.

According to this configuration, various processings can be assigned to the fingerprint sensor 31.

The storage unit 20 stores, for example, a plurality of gestures that can be assigned to the fingerprint sensor 31, a plurality of processings that can be assigned to the fingerprint sensor 31, and the reference information RI that is referred to for determining appropriateness of the combination of gesture and processing. For example, the control unit 10 notifies the user when an inappropriate combination of gesture and processing is input through a setting screen AU of the gesture operation information 23.

According to this configuration, when the user assigns a gesture operation to the fingerprint sensor, an appropriate combination of gesture and processing is urged.

Note that the effects described in the present specification are merely examples and are not limited, and other effects may be provided.

Note that the present technology can also have the configuration below.

(1) An electronic device, comprising:
   a fingerprint sensor; and
   a control unit that detects a fingerprint and a gesture of a finger that performs a touch operation on the fingerprint sensor, and executes a processing associated with the fingerprint and the gesture detected at the time of the touch operation while performing fingerprint authentication based on the fingerprint detected at the time of the touch operation.
(2) The electronic device according to (1), comprising
   a storage unit that stores fingerprint information including one or more pieces of fingerprint data and gesture operation information in which a combination of a gesture and a processing is defined for each piece of the fingerprint data, wherein
   the control unit collates the fingerprint and the gesture with the fingerprint information and the gesture operation information, and executes a processing associated with the fingerprint and the gesture.
(3) The electronic device according to (2), wherein
   the control unit detects the fingerprint and the gesture in a locked state in which a security lock is valid, and executes the processing associated with the fingerprint and the gesture without releasing the security lock.
(4) The electronic device according to (3), wherein
   the control unit calculates a concordance rate between a feature included in the fingerprint and a feature included in each piece of the fingerprint data, compares the concordance rate with a second threshold smaller than a first threshold necessary for releasing the security lock, collates the fingerprint with each piece of the fingerprint data, and executes a processing associated with fingerprint data matching the fingerprint and the gesture.
(5) The electronic device according to (4), wherein
   when the concordance rate is smaller than the first threshold, the control unit maintains the locked state after the processing is completed.
(6) The electronic device according to (5), wherein
   when the concordance rate is equal to or higher than the first threshold, the control unit releases the security lock after the processing is completed.
(7) The electronic device according to any one of (2) to (6), wherein
   the gesture operation information defines a combination of the gesture, option information, and the processing for each piece of the fingerprint data.
(8) The electronic device according to (7), wherein
   the option information includes at least one of position information of the electronic device, information regarding a holding state of the electronic device by a user, time information, information regarding a movement status of the electronic device, information regarding an orientation of the electronic device, information on brightness around the electronic device, information regarding a network connection state of the electronic device, information on a remaining battery amount of the electronic device, and information on an application being executed by the electronic device in the locked state.
(9) The electronic device according to any one of (2) to (8), wherein
   the storage unit stores a plurality of gestures that can be assigned to the fingerprint sensor, a plurality of processings that can be assigned to the fingerprint sensor, and reference information that is referred to for determining appropriateness of the combination of a gesture and a processing, and
   the control unit notifies a user when an inappropriate combination of a gesture and a processing is input through a setting screen of the gesture operation information.
(10) An information processing method executed by a computer, comprising:
   detecting a fingerprint and a gesture of a finger that performs a touch operation on a fingerprint sensor; and
   executing a processing associated with the fingerprint and the gesture detected at the time of the touch operation while performing fingerprint authentication based on the fingerprint detected at the time of the touch operation.
(11) A program for causing a computer to implement:
   detecting a fingerprint and a gesture of a finger that performs a touch operation on a fingerprint sensor; and
   executing a processing associated with the fingerprint and the gesture detected at the time of the touch operation while performing fingerprint authentication based on the fingerprint detected at the time of the touch operation.

### Reference Signs List

- 1: ELECTRONIC DEVICE

- 10: CONTROL UNIT
- 20: STORAGE UNIT
- 22: FINGERPRINT INFORMATION
- 23: GESTURE OPERATION INFORMATION
- 31: FINGERPRINT SENSOR
- RI: REFERENCE INFORMATION
- SU: SETTING SCREEN

## Claims

1. An electronic device, comprising:
a fingerprint sensor; and
a control unit that detects a fingerprint and a gesture of a finger that performs a touch operation on the fingerprint sensor, and executes a processing associated with the fingerprint and the gesture detected at the time of the touch operation while performing fingerprint authentication based on the fingerprint detected at the time of the touch operation.

2. The electronic device according to claim 1, comprising
a storage unit that stores fingerprint information including one or more pieces of fingerprint data and gesture operation information in which a combination of a gesture and a processing is defined for each piece of the fingerprint data, wherein
the control unit collates the fingerprint and the gesture with the fingerprint information and the gesture operation information, and executes a processing associated with the fingerprint and the gesture.

3. The electronic device according to claim 2, wherein
the control unit detects the fingerprint and the gesture in a locked state in which a security lock is valid, and executes the processing associated with the fingerprint and the gesture without releasing the security lock.

4. The electronic device according to claim 3, wherein
the control unit calculates a concordance rate between a feature included in the fingerprint and a feature included in each piece of the fingerprint data, compares the concordance rate with a second threshold smaller than a first threshold necessary for releasing the security lock, collates the fingerprint with each piece of the fingerprint data, and executes a processing associated with fingerprint data matching the fingerprint and the gesture.

5. The electronic device according to claim 4, wherein
when the concordance rate is smaller than the first threshold, the control unit maintains the locked state after the processing is completed.

6. The electronic device according to claim 5, wherein
when the concordance rate is equal to or higher than the first threshold, the control unit releases the security lock after the processing is completed.

7. The electronic device according to claim 2, wherein
the gesture operation information defines a combination of the gesture, option information, and the processing for each piece of the fingerprint data.

8. The electronic device according to claim 7, wherein
the option information includes at least one of position information of the electronic device, information regarding a holding state of the electronic device by a user, time information, information regarding a movement status of the electronic device, information regarding an orientation of the electronic device, information on brightness around the electronic device, information regarding a network connection state of the electronic device, information on a remaining battery amount of the electronic device, and information on an application being executed by the electronic device in the locked state.

9. The electronic device according to claim 2, wherein
the storage unit stores a plurality of gestures that can be assigned to the fingerprint sensor, a plurality of processings that can be assigned to the fingerprint sensor, and reference information that is referred to for determining appropriateness of the combination of a gesture and a processing, and
the control unit notifies a user when an inappropriate combination of a gesture and a processing is input through a setting screen of the gesture operation information.

10. An information processing method executed by a computer, comprising:
detecting a fingerprint and a gesture of a finger that performs a touch operation on a fingerprint sensor; and
executing a processing associated with the fingerprint and the gesture detected at the time of the touch operation while performing fingerprint authentication based on the fingerprint detected at the time of the touch operation.

11. A program for causing a computer to implement:
detecting a fingerprint and a gesture of a finger that performs a touch operation on a fingerprint sensor; and
executing a processing associated with the fingerprint and the gesture detected at the time of the touch operation while performing fingerprint authentication based on the fingerprint detected at the time of the touch operation.
